# EUROPEAN PATENT APPLICATION

(11) **EP 2 230 845 A1**
(43) Date of publication of application: **22.09.2010**
(21) Application number: 09155287.7
(22) Date of filing: 16.03.2009
(51) Int. Cl.: H04N 7/16

(54) **Providing control words to a receiver**

(71) Applicant: Irdeto Access B.V., 2132 HD Hoofddorp (NL)
(72) Inventor: Westerveld, Egbert, 5706 DZ Helmond (NL)
(74) Representative: van Looijengoed, Ferry Antoin Theodorus

(57) **Abstract**

A method and a system of transmitting one or more control words to a receiver system is described, wherein the one or more control words are generated by a scrambling system for scrambling during a crypto period data packets in a service stream. The method involves transmission of at least one service stream and a stream of entitlement control messages associated with said service stream to the receiver system, each entitlement control message comprising at least one encrypted control word; and controlling the processing load of the receiver system by modifying the duration of said crypto period.

## Description

### Field of the invention

The invention relates to providing control words to a receiver and, in particular, though not exclusively, to a methods and systems for transmitting control words to a receiver system, a control word stream, a control word server for distributing control words to a decoder terminal within a receiver system, and computer program products for executing such methods.

### Background of the invention

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets in the streams are scrambled (encrypted) with a randomly generated encryption key commonly referred to a control word. In order to increase the security of the streams, the control words changed periodically. Hence, control words are only valid during a control word period (also referred to as a crypto period). After each crypto period one or more new control word are generated for scrambling data packets in one or more subsequent crypto periods.

In order to descramble the scrambled data packets in the transport stream, the receiver must be informed about the current value of the control word. For the secure transmission of the control words, they are encrypted and sent in so-called entitlement control messages (ECMs) to the receiver. In order to process the ECMs, entitlement management messages (EMMs) transmit and manage the keys needed to decrypt ECMs. The ECM and EMM information streams are sent to the receiver in order to allow the receiver, in particular a smart card in the receiver, to decrypt EMMs, the ECMs and to descramble the TV services to which the subscriber is entitled.

Distribution of control words to receivers may be implemented in various ways. The current DVB standards, describe an in-band control word distribution scheme wherein control words are distributed to the receiver by a head-end system which is configured to multiplex streams of TV service data with associated streams of ECMs into an MPEG-2 transport stream and to transmit the transport stream to a receiver infrastructure.

In a conventional DVB transport stream the crypto period has a common constant time duration for all services. In addition, the crypto periods for all services are aligned. The crypto period duration defines the frequency (i.e. the rate) with which new ECM messages are sent to and processed by the receiver. As the secure device, e.g. the smart card, in the receiver may only process one ECM at a time, a short crypto period results in an increased processing load of the smart card, but improves signal security. A long crypto period allows the smart card to allocate computational resources to other tasks such as EMM processing or software updates at a cost of decreased signal security. Moreover, for applications that require the descrambling of multiple TV services, the existing practice of using a common crypto period duration for multiple services in combination with crypto period alignment implies that for each crypto period all new ECMs of all TV services should be processed within a relatively short time frame which is likely to require the use of multiple smart cards.

Given the limitations of the processing power and the storage capacity of the smart card, the throughput of conditional access messages such as EMS and EMMs should be such that the smart card is able to process the messages without seriously affecting the output signal while at the same time providing enough signal security. Hence - in view of the ever increasing number of TV services and streams per TV service in a transport stream and the ever increasing requirements of signal security - there is need for dynamically managing the processing load of the smart card in the receiver system.

### Summary of the invention

It is an object of the invention to reduce or eliminate at least one of the drawbacks known in the prior art and to provide in a first aspect of the invention to a method of transmitting one or more control words to a receiver system, wherein the one or more control words may be generated by a scrambling system for scrambling during a crypto period data packets in a service stream. The method may comprise at least one of the steps of: transmitting at least one stream of entitlement control messages associated with a service stream to the receiver system, each entitlement control message comprising at least one encrypted control word; and/or controlling the processing load of the receiver system, preferably the processing load of a secure device for decrypting entitlement control messages located in said receiver system, by modifying the duration of said crypto period. The invention thus allows the head-end to efficiently control of periods of increased processing load in the receiver system, in particular the smart card in the receiver system. Changing the crypto period allows remote load control of the smart card in the receiver system.

In one embodiment, the receiver system may comprise a secure device comprising a secret key for decrypting an entitlement control message in order to obtain one or more control words contained in said entitlement control message. The secure device, e.g. a smart card or a tamper-resistant module providing the functionality of the smart card, is configured for securely extracting the control words from the entitlement control messages using one or more secret keys which are stored in said secure device.

In another embodiment the service stream and the steam of entitlement control words may be transmitted in a transport stream, preferably an MPEG transport stream, to the receiver system. The method may thus be used in scrambling systems, such as a Simulcrypt head-end system, producing a transport stream as defined in the DVB standards.

In a further embodiment the modification in the duration of said crypto period may include selecting a duration within a range defined by a minimum crypto period duration and a maximum crypto period duration. In yet a further embodiment the selection is a random selection or a predetermined selection. Random selection may increase the signal security as it eliminates the predictability regarding the period in which a particular control word is valid. Alternatively, the selection may be a predetermined selection, e.g. on the basis of statistical information of the processing load or on the basis of a predetermined algorithm providing optimization of the processing load as a function of one or more parameters (e.g. the number service streams in the transport stream, the required signal security, the processing load specifications of the secure device, etc.).

In one embodiment the method may comprise at least one of the steps of: transmitting a first entitlement control message associated with a first crypto period in a first service stream to the receiver system, the first crypto period having a first duration; providing a second duration for a second crypto period in said first service stream to said scrambling system; and/or transmitting a second entitlement control message associated with the second crypto period in the first service stream to the receiver system. The method allows the head-end system to adapt the crypto period duration for each subsequent crypto period. Hence, the method thus provides true dynamic load control of the receiver system: after each crypto period the scrambling system may decide to temporarily decrease the processing load, e.g. because the execution of another task is required.

In another embodiment the method may comprise at least one of the steps of: providing a third duration for a third crypto period in a second service stream to said scrambling device; and/or transmitting a third entitlement control message associated with the third crypto period in the second service stream to the receiver system. In this embodiment the crypto period duration may be varied simultaneously in two or more service streams. Hence, in contrast to conventional schemes wherein the crypto periods of all services are aligned (i.e. coupled), dynamic modification of the crypto periods across different services is possible and provides decoupling of the crypto periods in the different service streams so that the smart card processing load can be managed for each individual service stream.

In yet another embodiment the scrambling system used in the method may comprise a scrambler for scrambling packets during a crypto period using a control word, an entitlement control message generator and a synchronizer for synchronizing the transmission of the scrambled packets and the entitlement control messages to the receiver system. Additionally, the scrambling system may comprise a crypto period manager connected to the synchronizer, wherein the method may comprise at least one of the steps of: the crypto period manager sending duration for a crypto period to the synchronizer; the synchronizer sending a request for an entitlement control message to the entitlement control message generator, the request comprising the duration of said crypto period; and/or the entitlement control message generator sending an entitlement control message associated with said crypto period to the synchronizer. The method may thus be simply incorporated in a head-end system implemented according to the Simulcrypt standard for Digital Video Broadcast as described in detail in ETSI TS 103.197 V1.4.1.

In a further aspect the invention relates to a method of distributing control words to one or more decoder terminals in a receiver system, wherein the control words may be generated by a scrambling system for scrambling data packets during a crypto period. The scrambling system may configured to control the processing load of said receiver system by modifying the duration of the crypto period, wherein the method may comprise at least one of the steps of: receiving at least one stream of entitlement control associated with a service stream, said service stream comprising at least two crypto periods; detecting a transition of a first crypto period of a first duration to a second crypto period of a second duration; obtaining one or more control words by decrypting the entitlement control message associated with the second crypto period; and/or transmitting the one or more control words to the one or more decoder terminals in the receiver system. Using this method in a receiver system comprising a control word server and one or more decoder terminal allows efficient extraction and re-distribution of the control words associated with a service stream comprising two or more crypto periods of different duration. Further the method allows the use of decoder terminals to which the control words are transmitted in an out-of-band signal via a secure communications channel to one decoder terminal or a group of decoder terminals.

In one embodiment the method may comprise the steps of: receiving at least one stream of entitlement control messages associated with a service stream, the service stream comprising crypto periods, at least part of the duration of said crypto periods being randomly distributed; and/or each detection of a crypto period transition triggering decryption of at least one entitlement control message associated with said crypto period transition and transmission of one or more control words contained in said entitlement control message to one or more decoder terminals.

In a further embodiment the receiver system may comprise a control word server comprising a receiver for receiving one or more streams of entitlement control messages associated with one or more service streams, said receiver being adapted to detect a crypto period transition in said one or more service streams, a secure device for decrypting entitlement control messages and a transmitter for transmitting control words to one or more decoder terminals in the receiver system.

In a further aspect the invention relates to a scrambling system for transmitting control words contained in entitlement control messages to a receiver system. The scrambling system may comprise: a scrambler for scrambling packets during a crypto period duration using a control word; an entitlement control message generator for generating entitlement control messages containing at least one control word; a transmitter for transmitting to the receiver system one or more streams of entitlement control messages associated with one or more service streams; a crypto period manager for controlling the processing load of the receiver system by modifying the duration of one or more crypto periods in the one or more service streams.

In yet another aspect the invention relates to a control word server for transmitting control words via one or more communications networks to one or more decoder terminals. The control word server may comprise: a crypto period transition detector for detecting a crypto period transition, a secure device comprising a secret key configured for decrypting an entitlement control message in response to the detection of a crypto period transition in order to obtain one or more control words contained in said entitlement control message, and/or a transmitter for transmitting the one or more control words via said one or more communications networks to the decoder terminal.

In one aspect the invention relates to a transport stream configured for remotely controlling the processing load of a receiver system receiving the transport stream. The transport stream may comprise at least one service stream and a stream of entitlement control messages associated with said service stream, said service stream comprising at least a first crypto period of a first duration and a second crypto period of a second duration. The controlling of the duration of the crypto periods in the service streams comprised in the transport streams allows processing load control of the receiver system, in particular the processing of decrypting ECMs in order to obtain control words for descrambling scrambled data packets. Such control is especially advantageous in receiver systems and/or control word distribution systems using one or more secure devices, wherein each secure device arranged for decrypting multiple service streams simultaneously.

The invention also relates to computer program products comprising software code portions configured for, when run in the memory of a management control unit of a scrambler system, executing the method steps as described above. The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic representation of a head-end system according to one embodiment of the invention.
**Fig. 2** depicts a schematic of a conventional transport stream.
**Fig. 3** depicts a conventional receiver system for decoding a transport stream.
**Fig. 4** depicts the information flow between the SCS and the ECMG according to one embodiment of the invention.
**Fig. 5** depicts a transport stream according to one embodiment of the invention.
**Fig. 6** depicts a receiver system adapted for use with a head-end system according to the invention.
**Fig. 7** depicts the transmission of control words over a secure communications channel.
**Fig. 8** depicts the transmission of control words over a secure communications channel using a transport stream according to one embodiment of the invention.

### Detailed description

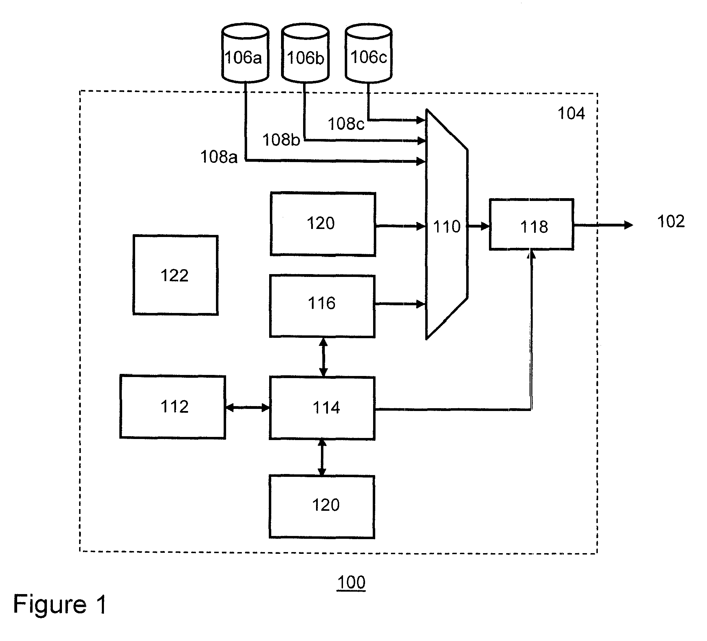

**Fig. 1** depicts a schematic representation of a head-end system **100** according to one embodiment of the invention. The head-end system is configured for producing a scrambled content stream **102** to be sent over one or more networks to a receiver system such as a set-top box. The head-end system may be implemented according to the Simulcrypt standard for Digital Video Broadcast as described in detail in ETSI TS 103.197 Vl.4.1 of March 2007. Although the head-end is typically employed to transmit transport stream (TS) packets in accordance with the MPEG-2 standards (International Standard ISO/IEC 13818-1) via a terrestrial, satellite or cable broadcast system, the methods and systems outlined herein may also be employed to provide scrambled content in Internet Protocol (IP) packets to a receiver using broadcasting, multicasting or point-to-point transmission techniques.

The head-end system may receive the content from one or more content delivery systems **106a-106c** each arranged to deliver one or more TV services, wherein each TV service comprises a number of elementary streams forming a service stream **108a-108c.** An elementary stream may comprise e.g. audio, video, subtitles, applets or other data. A multiplexing system (MUX) **110** multiplexes various input streams e.g. the elementary streams of the one or more service streams and produces a transport stream comprising a sequence of transport stream (TS) packets, each having a header and a payload wherein the payload comprises units of data from a particular elementary stream.

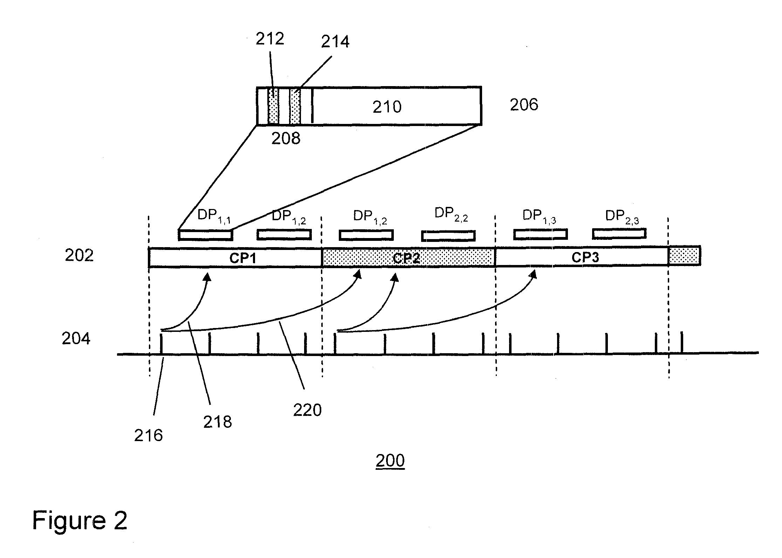

The head-end system may further comprise a control word generator (CWG) **112** connected to a Simulcryt Synchronizer (SCS) **114.** The SCS is a synchronization system that provides control words to the ECM generator (ECMG) **116** and to a scrambler **118** and synchronizes the ECM playout relative to the crypto period. The scrambler uses the control words and a common scrambling algorithm in order to scramble the payload of the packets. The ECMG receives control words used for scrambling the packets, encrypts the control words under a session key or a product key Pk and produces ECMs carrying the control word (used for scrambling the packets for a specific duration) in an encrypted form. The elementary streams provided by the content delivery systems and streams of entitlement control messages (ECMs) are sent to the input of the MUX. The SCS subsequently synchronizes each of the EMC streams with a fixed time offset (positive or negative) relative to the start of the new crypto period. A crypto period change is signalled using so-called scrambling status bits (which will be described hereunder in more detail) in the TS packet headers. This mechanism will be described in more detail with reference to **Fig. 2****.**

The head-end system may further comprise an entitlement management message generator **120** (EMMG) generating entitlement management messages (EMMs). An EMM is used to convey the secret key (i.e. the session key or product key) used by the receiver system to decrypt the ECMs. The EMM further comprises data related to the addition or removal of viewing or usage rights or related to user-specific data. The general operation of the components in the head-end system may be controlled by a network management system (NMS) **122.**

**Fig. 2** depicts a schematic of a conventional transport stream generated by the head-end system. The transport comprises a service stream **202** divided in crypto periods CP1,CP2,CP3. During each crypto period data packets are scrambled using a (unique) control word. For each crypto period duration a different value of the control word is used. Control words associated with the crypto periods in the service stream are encrypted and sent in a stream of ECMs **204** to the receiver system. The stream of ECMs **204** is synchronized with the service stream **202** such that at least one ECM coincides with a crypto period. In the embodiment of **Fig. 2****,** one ECM 216 comprises two control word values, a first control word **218** that is valid for the crypto period duration with which it coincides and a second control word **220** that is valid for the crypto period duration following the crypto period with which it coincides. In other embodiments an ECM only comprises a control word for the crypto period following the crypto period with which the ECM coincides.

During a crypto period multiple ECMs are sent at a higher frequency than the crypto period, e.g. every 100 milliseconds, to the receiver. Such multiple transmission of ECMs associated with a crypto period is necessary for avoiding waiting time when starting the decoder server or when changing channels. Delays in the order of seconds are unacceptable so in practice EMCs are sent to the receiver in a frequency between 5 and 20 messages per second.

Each TS packet **206** has a header **208** and a scrambled payload **210.** A packet identifier field (PID) **212** in the header contains a unique number used to identify elementary streams in single or multi-program transport stream. As the receiver system only requires one ECM per period, the header further comprises information allowing the receiver system to filter out duplicate ECMs. The ECMs are carried in TS packets comprising their own unique PID value. A program map table generated by an PSI/SI (program specific information/service information) generator in the head-end system (not shown) links the ECM PID value to the PID values of the elementary streams that have been scrambled using the control words contained in the associated stream of ECMs.

The header further comprises scrambling state information in the form of a transport scrambling control field **214.** The crypto periods may be regarded as alternating odd and even crypto periods. TS packets scrambled during odd crypto period carry the value "11" in the transport scrambling control field and TS packets scrambled during an even crypto period carry the value "10" in the transport scrambling control field. Hence, the transition between these values in the transport control field identifies a transition from one crypto period to the next.

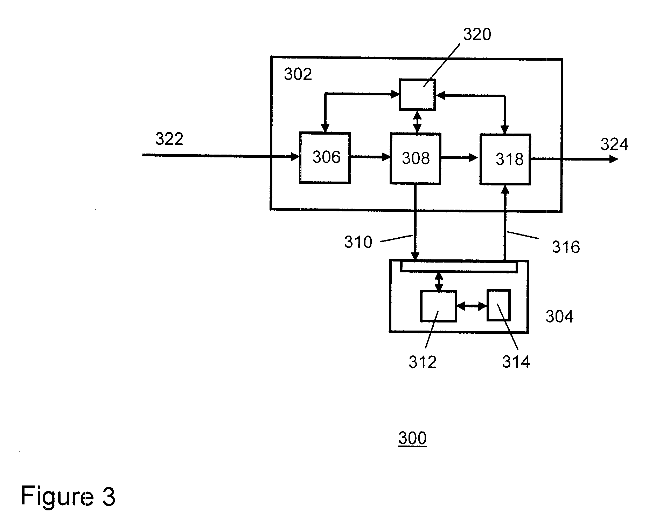

An example of a conventional receiver system **300** for decoding a transport stream generated by the head-end system is illustrated in **Fig. 3****.** The receiver system comprises a decoder **302** and a secure device **304,** e.g. a removable smart card or a tamper-resistant module providing the functionality of the smart card. The receiver system receives the transport stream **322** comprising the streams of scrambled packets and the associated streams of ECMs via a network interface and a tuner/demodulator **306.** A demultiplexer (DEMUX) **308** filters out the TS packets belonging to one or more TV services as selected by a service controller **320.** A program map table in the transport stream may contain the PID values in the PID field of the headers of the required TS packets. The ECMs **310** containing a preselected PID value are routed to the secure device **304,** which comprises a processor **312** for decrypting the encrypted control words contained in the ECMs using key information stored in a memory **314.** The control words **316** are subsequently sent to a descrambling device **318** in the decoder which decrypts the payload of the TS packets containing the values "10" and "11" in the transport scrambling field.

The processing load of the smart card in the receiver system is determined by some parameters in the head-end system. One parameter is the frequency or the rate (as determined by the crypto period duration) with which new ECMs are sent to the receiver system. A short crypto period results in an increased processing load, but improves signal security. A long crypto period results in a decreased processing load, allowing the smart card to allocate computational resources to other tasks, such as the processing of one or more EMMs or executing a software update in the smart card. A long crypto period however degrades the signal security.

Another parameter is the number of services carried by the transport stream. Typically for each service stream an associated synchronized stream of ECMs is generated by the head-end. Conventional head-end systems typically generate a transport stream wherein all services have the same crypto period (typically between 10 and 30 seconds) and wherein the crypto periods of the different services are aligned. Hence, when decrypting multiple services from the transport stream using a smart card, each time a new crypto period starts, all ECMs of all services should be processed by the smart card within a short time frame. Such scheme may be incompatible with the limited processing resources of the smart card. The available processing resources in a smart card may be further decreased when - during the ECM processing - one or more EMMs require processing or when the smart card is required to perform other processing tasks. Such processing loads may seriously affect the quality of the signal of descrambled services.

In order to manage such periods of increased processing load, the SCS in **Fig. 1** is connected to a crypto period manager (CPM) **120** that manages the crypto periods used by the SCS for each service stream in the transport stream. In further variants the CPM may be arranged as a module in the SCS. The CPM is further connected (not shown) to the various other modules, e.g. the ECMG/EMMG, of the head-end and is configured to dynamically change the duration of the crypto period in a service stream. Such dynamic control of the crypto period duration provides remote load control of the secure device, (e.g. a smart card) in the receiver system. Further, the CPM is configured to controllably vary the crypto period duration used in the different service streams. Hence, in contrast to conventional schemes wherein the crypto periods of all services are aligned (i.e. coupled), the CPM allows varying the crypto periods across different services thereby providing decoupling of the crypto periods in the different streams so that the smart card processing load for each individual service stream can be managed.

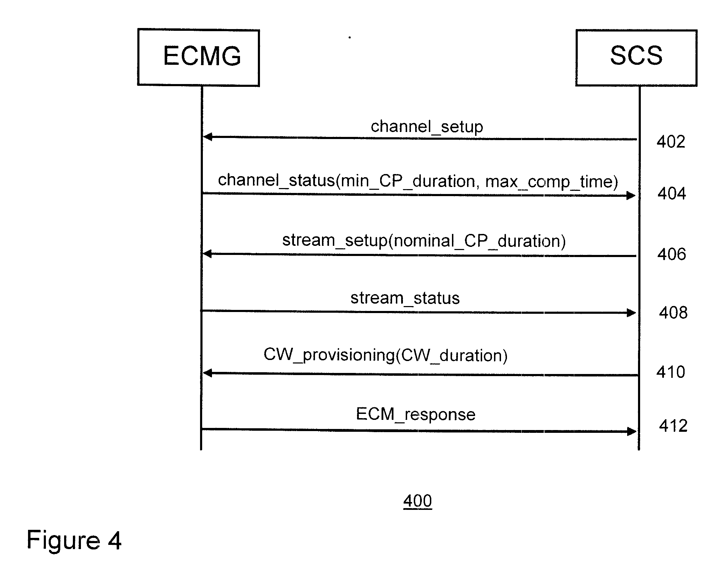

The functionality of the CPM will be described hereunder with reference to the flow diagram of **Fig. 4****.** This figure depicts the information flow **400** between the SCS comprising a CPM and the ECMG when setting up and transmitting a transport stream to a receiver system. In order to allow controlled variation of the crypto period during transmission of a stream, the CPM comprises two parameters: (i) min _CW_period indicating the minimal duration (in units of 100 ms) of a crypto period; and, (ii) max_CW_period indicating the maximal duration (in units of 100 ms) of a crypto period. For each stream and each crypto period the CPM selects a crypto period duration according to a predetermined scheme within the range defined by min_CW_period and max_CW_period.

Before the process flow in **Fig. 4** is started, a TCP connection between the head-end and the receiver system is set up. Once the TCP connection is established, the SCS sends a channel_setup message to the ECMG (step **402).** In response, the ECMG sends a channel_status message back to the SCS (step **404)** containing the min_CW_duration and max_comp_time parameters which are checked by the SCS. The min_CP_duration parameter - indicating the minimum supported amount of time a control word shall be active before it may be changed - should be lower or equal to the configured min_CW_period parameter. If the value of min_CP_duration is higher than the value of min_CW_period, the value of min_CW_Period is set by the SCS to the value of min_CP_duration (step **406).** Further, the max_comp_time - indicating the worst case time needed by an ECMG to compute an ECM when all the streams in a channel are being used - should be lower than the value of the min_CP_duration and the min_CW_period (step **408).** Thereafter, the SCS sends a stream_setup message to the ECMG comprising amongst others the nominal_CP_duration parameter, indicating the nominal duration of the crypto periods in the particular stream. In this case, the SCS may use the average of min_CW_period and max_CW_period for the nominal_CP_duration.

Once the TCP connection, the channel and the stream have been correctly established, the ECM will be transferred to the SCS in an ECM_response message as a response to the CW_provisioning message (steps **410** and **412).** After each crypto period, the CPM determines whether the crypto period should be changed. If a new crypto period duration is required, it selects a new value from the range defined by min_CW_period and max_CW_period.

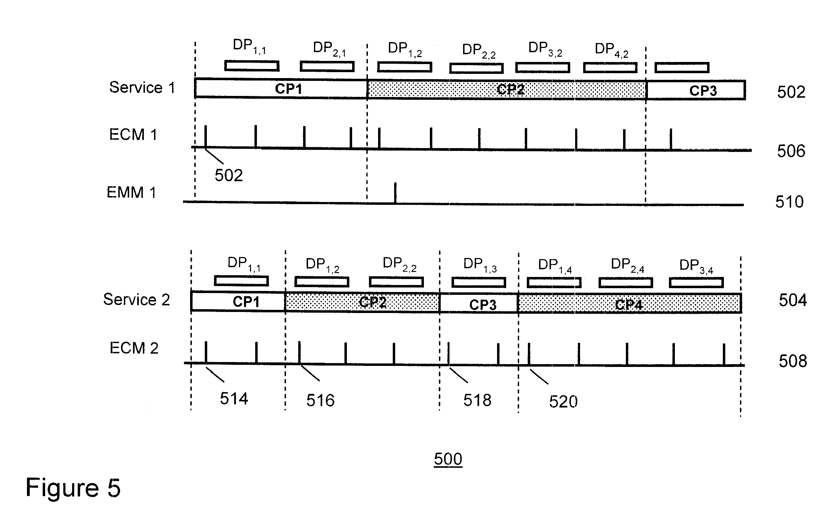

**Fig. 5** depicts a transport stream **500** according to one embodiment of the invention wherein the crypto periods in the streams containing the services are dynamically changed by the SCS. Changes to the crypto period may be triggered by the network management system (NMS) **122,** which may send an EMM processing request message to the CPM in order to inform the CPM that an EMM associated with a first service stream is going to be sent in the transport stream or via an out-of-band channel to one or more receiver systems. In response to this signal, the CPM may increase the crypto period for the first service stream (i.e. decrease the processing load of the smart card of the receiver systems targeted by the EMM) by sending a new CP_duration value in a CW_provisioning message to the ECMG. Hence, during transmission of the transport stream, the crypto periods in the first service stream **502** is dynamically changed in response to the transmission of an EMM **510.**

In reaction to the new crypto period duration, the ECMs **512** coinciding with the first crypto period CP1 of the first service stream now contain a first control word valid for the first (even) crypto period CP1 and a second control word valid for the second (odd) crypto period CP2 of increased duration. During the increased crypto period duration CP2 the EMM **510** is sent to the smart card of the receiver system thereby enabling the receiver system to process the EMM without seriously affecting the descrambling process.

The CPM may adjust the crypto period duration within allowable boundaries on the basis processing information sent to the CPM. The processing information may include for example the average time required for the smart card to process a particular EMM. After processing of the EMM, e.g. after the second crypto period CP2, the CPM may set the crypto period back to the previous shorter crypto period duration or it may select a new crypto period duration, e.g. a randomly selected value, and continue transmission in crypto period CP3 on the basis of this new crypto period duration.

In addition to controlling the crypto periods in one service stream **502,** the CPM may also independently control the crypto periods in the further service streams. For example, the second service stream **504** depicted in **Fig. 5** may be generated by selecting a new crypto period duration for each subsequent crypto period in the stream. The selection of the crypto period may be a random selection using e.g. a pseudo random generator located in the CPM. Hence, the ECM **514** coinciding with the first (even) crypto period CP1 of the second service stream may comprise a first control word valid for the first crypto period (associated with data packets D_{1,1} and D_{2,1})and a second control word valid for the second (odd) crypto period CP2 (associated with data packets 0_{1,2},D_{2,2} D_{3,2},D_{4,2}) wherein the duration of the first and second crypto periods are randomly selected between a minimum and maximum value. In a similar way ECMs **516,518,520** coinciding with the second, third and fourth crypto period (CP2,CP3,CP4) respectively are send to the receiver system. Further, within each crypto period multiple ECMs associated with a crypto period are sent to the receiver for reasons as explained above with reference to **Fig. 3****.** In further variants, the crypto period duration may be determined using a predetermined algorithm and/or other parameters such as the number of elementary streams in a service stream, the type of service or the type of receiver system (e.g. mobile TV handheld or set-top box).

A random distribution of the crypto period duration across different service streams in a transport stream may provide a more homogeneous distribution of the processing load of the smart card. In addition, random variation of the crypto period duration will further increase the signal security as it will take away the predictability of the duration of a crypto period in which an associated control word is valid. Hence, in one embodiment, the CPM selects for each stream and for each crypto period a random duration between preconfigured parameters min_CP_period and max_CP_period. Using such scheme will make re-distribution of the control words to unauthorized receiver systems more difficult.

In a further embodiment, in addition to the randomization of the crypto period duration, randomization of the delay_start and delay_stop parameters between predetermined boundaries may be performed. The delay_start parameter indicates the amount of time (in units of 100 ms) between the start of a crypto period and the start of a broadcasting of the ECM associated with this period. Similarly, the delay_stop parameter indicates the amount of time (in units of 100 ms) between the end of a crypto period and the end of the broadcasting of the ECM associated with this period. In this embodiment the configuration of the SCS may contain four new parameters. For each stream and for each crypto period the SCS selects a random duration between the configured parameters min_delay_start and max_delay_start for use of the delay_start parameter and a random duration between the configured parameter min_delay_stop and max_delay_stop for use of the delay_stop value. Random variation of the delay_start and delay_stop parameters may increase the signal security as it will be more difficult for third parties to correlate the stream of ECMs with the associated service stream.

The new parameters for dynamically varying the crypto period duration and for dynamically varying the time between start/end of a crypto period and the start/end of the broadcasting of an associated ECM may be a user defined parameters which allows the SCS to be configured directly from the head-end.

**Table 1: user defined DVB parameters**

| Parameter type value | Parameter type | Units | Length (bytes) |
|---|---|---|---|
| 0x8100 | min CW period | Uimsbf/n x 100 ms | 2 |
| 0x8101 | max CW period | Uimsbf/n x 100 ms | 2 |
| 0x8102 | min_Delay start | Uimsbf/n x 100 ms | 2 |
| 0x8103 | max Delay start | Uimsbf/n x 100 ms | 2 |
| 0x8104 | min Delay stop | Uimsbf/n x 100 ms | 2 |
| 0x8105 | max Delay stop | Uimsbf/n x 100 ms | 2 |

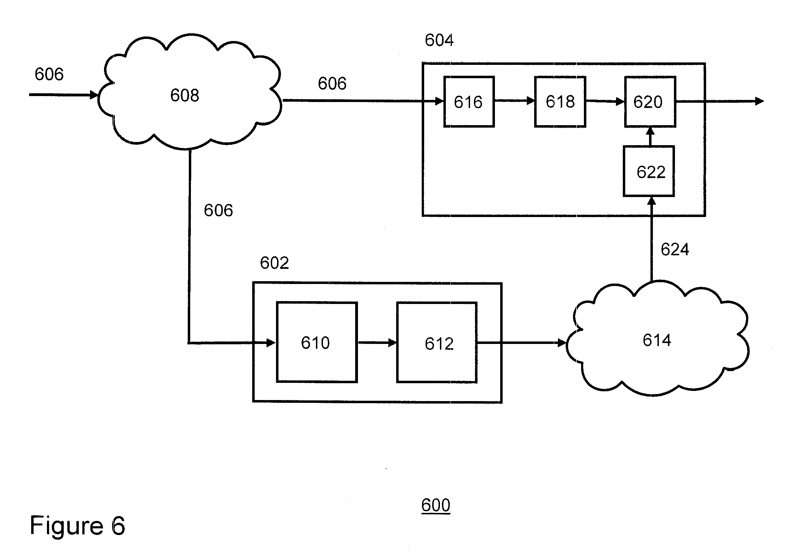

**Fig. 6** depicts a receiver configuration adapted for use with a head-end system according to the invention. A receiver system **600** comprises a control word server **602** and a decoder terminal **604.** In this variant, the receiver system is configured such that the decoder terminal uses a separate communication infrastructure for obtaining the control words required for descrambling one or more services in the transport stream. To that end, the control word server receives the transport stream **606** from the broadcast network **608** and extracts the control words from the broadcast stream using a decryptor **610** configured to filter the ECMs out of the transport stream and to decrypt ECMs in order to obtain control words.

In order to detect a transition in the crypto period and to decrypt the entitlement control messages, the decryptor may comprise similar functional elements as used in the receiver system described with reference to **Fig. 3****,** e.g. a tuner/demodulator, a demultiplexer and one or more smart cards or a tamper-resistant modules providing the functionality of the smart card. Similarly, the decoder terminal may comprise a tuner/demodulator **616,** a demultiplexer **618** and a descrambling device **620** to filter and descramble TS packets of one or more selected service streams from the transport stream.

Further, the decoder terminal may comprise a control word client **622** for setting up a control word session with the control word server **602.** When a subscriber requires a broadcast service, he may instruct the receiver to contact the control word server via a communications network **614** e.g. the Internet using a secure web interface. After an authentication procedure a control word session is established between the control word server and the decoder terminal in which control words are sent over a secure, preferably low delay communication channel **624** to the descrambler in the decoder terminal.

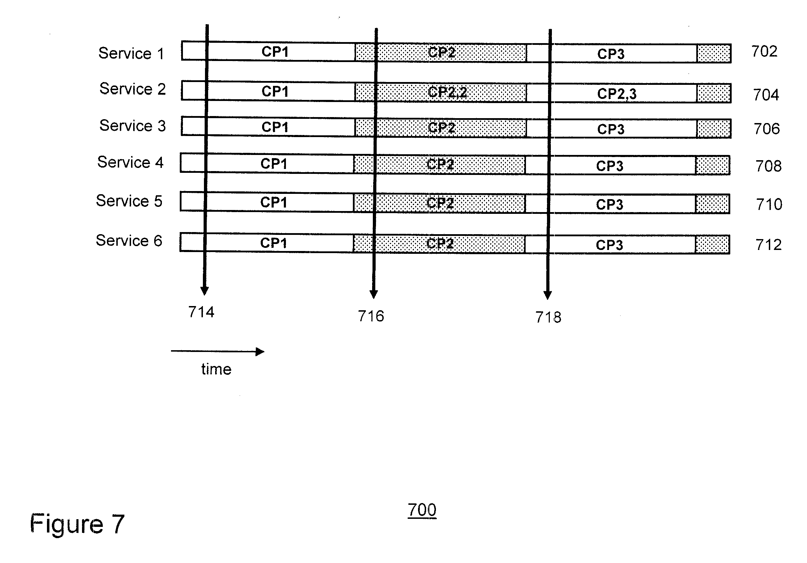

**Fig. 7** depicts the distribution of control words using a receiver system as described with reference to **Fig. 6****.** In this embodiment, a conventional transport stream comprising six service streams **702-712** is transmitted by the head-end to the control word server **602** and the decoder terminal **604** of the receiver system. Each service steam uses the same crypto period duration and the crypto periods are aligned across the service streams. Upon detection of a transition to a first crypto period CP1, the decryptor **610** retrieves and decrypts for each service stream the ECM associated with the first crypto period CP1. The control word server may detect a transition to a new crypto period on the basis of the transport scrambling control field in the header of the TS packets, e.g. TS packets carrying data of a service stream and/or TS packets carrying an ECM. To that end, the encryptor is configured for monitoring the transport scrambling control field of TS packets received by the decryptor and detecting changes in this field according to the scheme as explained above with reference to **Fig. 2****.**

The control words thus obtained (i.e. a first control word for the first crypto period CP1 and a second control word for the subsequent crypto period CP2) are extracted and stored in a memory of the control word server. Further, for each pair of control words service identification information is extracted from the ECM. Thereafter a transmitter **612** transmits the control words and the associated service identification information via one or more communications networks **614** over a secure communications channel **624** to the decoder terminal **604.** As the control word server is preferably configured for decrypting the ECMs of all service streams (or at least a significant part of all service streams) in the transport stream and as the processing capacity of a single smart card is limited, the control word server typically uses multiple smart cards in order to produce all ECMs within a short time period.

Hence, for each new crypto period the control word server transmits the control word associated with that crypto period **714,716,718** to the decoder terminal. In this embodiment the control words are thus periodically updated (i.e. with a period equal to the crypto period duration) and transmitted to the decoder system. Upon reception of the control words, the decoder terminal may select on the basis of service identification information one or more control words and descramble packets in the transport stream associated with these control words.

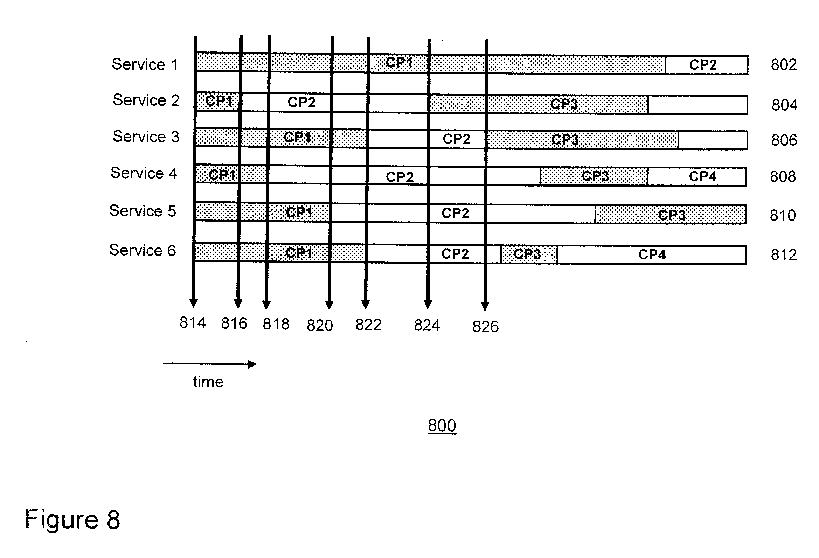

**Fig. 8** depicts the transmission of control words over a secure communications channel when using a transport stream according to one embodiment of the invention. The transport stream is generated by a head-end which is configured to remotely control the processing load of the one or more smart cards or secure processors in the decryptor of the control word server. In the example of **Fig. 8****,** the head-end has temporarily increased the first crypto period duration CP1 of the first service **802** in order to allow the processing of an EMM associated with that service. For an even distribution of the ECM processing load and increased signal security, the crypto periods in the other service streams **804-812** are randomly varied by the CPM in the head-end system. Upon reception of the transport stream, the control word server collects at a first point in time T₁ **814** all pairs of control words associated with the first crypto period CP1 and directly transmits the control words to the decoder terminal. Thereafter, every transition to a new crypto period duration **816-826** in one of the service streams **802-812,** the one or more control words associated with that new crypto period are retrieved and subsequently sent to the decoder terminal.

For example, the crypto period transition **816** following the first transmission of control words **814** takes place at a second point in time T₂ (after T₁) in the second service stream. Hence, at that point in time an update of the control words for the second service stream is required.

The decrypter therefore retrieves the ECM associated with the second crypto period CP2 in the second service stream from the transport steam, extracts the pair of control words (odd, even) from the ECM and immediately transmits these control words over the secure communication channel to the decoder terminal. In that way each transition to a new crypto period **816-826** in one of the service streams triggers a transmission of one or more control words to the one or more decoder terminals.

In the scheme as illustrated in **Fig. 8****,** at every crypto period transition in one of the service streams the decoder terminal requires an update of one or more control words associated with that crypto period transition. Hence, fast response of the control word server **602** to transitions in the crypto period in the service streams of the transport stream is important as the correlation between the crypto periods in the services streams sent to the decoder terminal and the transmission of the control words sent by the control word server via the secure communications channel should be kept in sync. For that reason, the control word server may be optimized for fast control word extraction and fast transmission to the decoder terminal. The secure communications channel may therefore be configured as a low delay communications channel.

As is illustrated in **Fig. 8****,** crypto period transitions in different service streams may coincide so that an update of control words for more than one service may be required. For example control word transmission **822** comprises at least the control words corresponding to the second and third crypto periods of the third and sixth service stream respectively). Random variation of the crypto periods by the head-end system will thus result in a-periodic or random transmission of control words wherein each control word transmission correlates with a crypto period transition in one of the service streams. Random distribution of the crypto period duration will result a random distribution of crypto periods transition (in time), thereby reducing the processing load of the receiver system. In that way, the receiver system may reduce the number of secure devices (e.g. smart cards) it uses for decrypting ECMs.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Method of transmitting one or more control words to a receiver system, the one or more control words being generated by a scrambling system for scrambling during a crypto period data packets in a service stream, the method comprising the steps of:
- transmitting at least one stream of entitlement control messages associated with at least one service stream to the receiver system, each entitlement control message comprising at least one encrypted control word;
- controlling the processing load of the receiver system, preferably the processing load of a secure device for decrypting entitlement control messages located in said receiver system, by modifying the duration of said crypto period.

2. Method according to claim 1, wherein the receiver system comprises a secure device comprising a secret key for decrypting an entitlement control message in order to obtain one or more control words contained in said entitlement control message.

3. Method according to claims 1 or 2, wherein the service stream and the stream of entitlement control words are transmitted in a transport stream, preferably an MPEG transport stream, to the receiver system.

4. Method according to any of claims 1-3, wherein said modification in the duration of said crypto period includes selecting a duration within a range defined by a minimum crypto period duration and a maximum crypto period duration.

5. Method according to claim 4, wherein said selection is a random selection or a predetermined selection.

6. Method according to any of claims 1 to 5, the method further comprising the steps of:
- transmitting a first entitlement control message associated with a first crypto period of a first service stream to the receiver system, the first crypto period having a first duration;
- providing a second duration for a second crypto period in said first service stream to said scrambling system; and,
- transmitting a second entitlement control message associated with the second crypto period in the first service stream to the receiver system.

7. Method according to claim 6, the method further comprising the steps of:
- providing a third duration for a third crypto period in a second service stream to said scrambling device;
- transmitting a third entitlement control message associated with the third crypto period in the second service stream to the receiver system.

8. Method of distributing control words to one or more decoder terminals in a receiver system, the control words being generate by a scrambling system for scrambling data packets during a crypto period and configured to control the processing load of said receiver system by modifying the duration of the crypto period, the method comprising the steps of:
- receiving a stream of entitlement control messages associated with at least one service stream, said service stream comprising at least two crypto periods;
- detecting a transition of a first crypto period of a first duration to a second crypto period of a second duration;
- obtaining one or more control words by decrypting the entitlement control message associated with the second crypto period; and,
- transmitting the one or more control words to the one or more decoder terminals in the receiver system.

9. Method according to claims 8, wherein the method comprises the steps of:
- receiving a stream of entitlement control messages associated with at least one service stream, the service stream comprising crypto periods, at least part of the duration of said crypto periods being randomly distributed; and,
- each detection of a crypto period transition triggering decryption of at least one entitlement control message associated with said crypto period transition and transmission of one or more control words contained in said entitlement control message to one or more decoder terminals.

10. Method according to claims 8 or 9, wherein the one or more control words are transmitted via one or more communications networks, preferably using a secure communications channel, to the one or more decoder terminals.

11. Method according to any of claims 8-10, wherein the receiver system comprises a control word server comprising a receiver for receiving streams of entitlement control messages, a secure device for decrypting entitlement control messages and a transmitter for transmitting control words to one or more decoder terminals in the receiver system.

12. Method according to any of claim 8-11, wherein the duration of one or more crypto periods in the at least one service stream is randomly selected from a range defined by a minimum crypto period duration and a maximum crypto period duration.

13. A scrambling system for transmitting control words contained in entitlement control messages to a receiver system, the scrambling system comprising:
- a scrambler for scrambling packets during a crypto period duration using a control word;
- an entitlement control message generator for generating entitlement control messages containing at least one control word;
- a transmitter for transmitting to the receiver system streams of entitlement control messages associated with one or more service streams;
- a crypto period manager for controlling the processing load of the receiver system by modifying the duration of one or more crypto periods in the one or more service streams.

14. A control word server for transmitting control words to via one or more communications networks to one or more decoder terminals, the control word server comprising:
- a receiver for receiving at least one stream of entitlement control messages associated with at least one service stream, said service stream comprising at least a first crypto period of a first duration and a second crypto period of a second duration.
- a crypto period transition detector for detecting a crypto period transition;
- a secure device comprising a secret key configured for decrypting an entitlement control message associated with a crypto period in order to obtain one or more control words contained in said entitlement control message;
- a transmitter for transmitting the one or more control words via said one or more communications networks to the decoder terminal.

15. A transport stream configured for remotely controlling the processing load of a receiver system receiving the transport stream, the transport stream comprising at least one service stream and at least one stream of entitlement control messages associated with said service stream, said service stream comprising at least a first crypto period of a first duration and a second crypto period of a second duration.

16. A computer program product comprising software code portions configured for, when run in the memory of a computer, executing the method steps according to any of claims 1-7 or claims 8-12.
